# EUROPEAN PATENT APPLICATION

(11) **EP 4 607 836 A1**
(43) Date of publication of application: **27.08.2025**
(21) Application number: 23879020.8
(22) Date of filing: 12.10.2023
(51) Int. Cl.: H04L 5/00

(54) **MULTICAST BROADCAST SERVICE TRANSMISSION METHOD AND APPARATUS, AND TERMINAL DEVICE AND NETWORK DEVICE**

(30) Priority: 21.10.2022 CN 202211292608
(71) Applicant: Beijing Unisoc Communications Technology Co., Ltd, Beijing 100083 (CN)
(72) Inventor: WANG, Hualei, Beijing 100083 (CN)
(74) Representative: Mewburn Ellis LLP
(86) International application number: PCT/CN2023/124310
(87) International publication number: WO 2024/083029

(57) **Abstract**

A method and an apparatus for multicast broadcast service (MBS) transmission, a terminal device, and a network device are provided, which relate to the field of communication technology. The method includes the following. A network device sends first information, where the first information includes information related to an MBS broadcast supported by a first-type terminal device, and a maximum bandwidth supported by the first-type terminal device is 20 megahertz (MHz). A terminal device receives the first information. The network device sends the MBS broadcast according to the first information. The terminal device receives the MBS broadcast according to the first information. In this way, after receiving the first information, the first-type terminal device can perform MBS broadcast transmission according to the first information, thereby realizing enhanced MBS transmission with aid of the first information, and thus improving compatibility and stability of network transmission.

## Description

### TECHNICAL FIELD

The disclosure relates to the field of communication technology, and more particularly, to a method and an apparatus for multicast broadcast service (MBS) transmission, a terminal device, and a network device.

### BACKGROUND

A multicast/broadcast service (MBS) is introduced in a standard protocol specified by the 3^{rd} generation partnership project (3GPP).

The MBS may include an MBS broadcast and an MBS multicast, where MBS broadcast may mean that the MBS is transmitted in a broadcast mode, and MBS multicast may mean that the MBS is transmitted in a multicast mode or a group cast mode.

For MBS broadcast, a terminal device capable of MBS broadcast reception may or may not have a valid version of system information (SI), such as system information block 20 (SIB20) and SIB 21, regardless of a radio resource control (RRC) state that the terminal device is in.

At present, for an MBS broadcast, a frequency-domain resource for the MBS broadcast can be configured via *cfr-ConfigMCCH-MTCH* information carried in SIB 20. The frequency-domain resource for the MBS broadcast can also be referred to as a common frequency resource (CFR) used for multicast control channel (MCCH) reception and multicast traffic channel (MTCH) reception.

However, in the current standard protocol, when discussing configuration of the frequency-domain resource for the MBS broadcast, difference in capabilities of different types of terminal devices is not taken into consideration, and there is a type of terminal device which may not support the frequency-domain resource for the MBS broadcast configured via *cfr-ConfigMCCH-MTCH* information in SIB 20. As a result, such type of terminal device is unable to perform MBS broadcast reception. In this case, with regard to how such type of terminal device enhances MBS broadcast transmission, there is currently no specific solution, and therefore, further studies are needed.

### SUMMARY

The disclosure provides method and an apparatus for multicast broadcast service (MBS) transmission, a terminal device, and a network device, which are intended to solve the problem of how to enhance MBS transmission for such type of terminal device, thereby improving flexibility and operability of uplink (UL) power control, and ensuring performance and reliability of UL transmission.

In a first aspect, a method for MBS transmission is provided in the disclosure. The method includes the following. First information is received, where the first information includes information related to an MBS broadcast supported by a first-type terminal device, and a maximum bandwidth supported by the first-type terminal device is 20 megahertz (MHz). The MBS broadcast is received according to the first information.

It can be seen that, in order to ensure that the first-type terminal device can perform MBS broadcast transmission, in embodiments of the disclosure, the first information is introduced for the first-type terminal device, where the first information may include the information related to the MBS broadcast supported by the first-type terminal device, and the first information is sent to the first-type terminal device by a network device.

In this way, after receiving the first information, the first-type terminal device can perform MBS broadcast transmission according to the first information, thereby realizing enhanced MBS transmission with aid of the first information, and thus improving compatibility and stability of network transmission.

In a second aspect, a method for MBS transmission is provided in the disclosure. The method includes the following. First information is sent, where the first information includes information related to an MBS broadcast supported by a first-type terminal device, and a maximum bandwidth supported by the first-type terminal device is 20 MHz. The MBS broadcast is sent according to the first information.

In a third aspect, an apparatus for MBS transmission is provided in the disclosure. The apparatus includes a receiving unit. The receiving unit is configured to receive first information, where the first information includes information related to an MBS broadcast supported by a first-type terminal device, and a maximum bandwidth supported by the first-type terminal device is 20 MHz. The receiving unit is further configured to receive the MBS broadcast according to the first information.

In a fourth aspect, an apparatus for MBS transmission is provided in the disclosure. The apparatus includes a sending unit. The sending unit is configured to send first information, where the first information includes information related to an MBS broadcast supported by a first-type terminal device, and a maximum bandwidth supported by the first-type terminal device is 20 MHz. The sending unit is further configured to send the MBS broadcast according to the first information.

In a fifth aspect, steps in the method in the first aspect are applied to or in a terminal device.

In a sixth aspect, steps in the method in the second aspect are applied to or in a network device.

In a seventh aspect, a terminal device is provided in the disclosure. The terminal device includes a processor, a memory, and computer programs or instructions stored in the memory, where the processor is configured to execute the computer programs or instructions to implement steps in the method in the first aspect.

In an eighth aspect, a network device is provided in the disclosure. The network device includes a processor, a memory, and computer programs or instructions stored in the memory, where the processor is configured to execute the computer programs or instructions to implement steps in the method in the second aspect.

In a ninth aspect, a chip is provided in the disclosure. The chip includes a processor and a communication interface, where the processor is configured to implement steps in the method in the first aspect or the second aspect.

In a tenth aspect, a chip module is provided in the disclosure. The chip module includes a transceiver assembly and a chip. The chip includes a processor, where the processor is configured to implement steps in the method in the first aspect or the second aspect.

In an eleventh aspect, a computer-readable storage medium is provided in the disclosure. The computer-readable storage medium is configured to store computer programs or instructions which, when executed, are operable to implement steps in the method in the first aspect or the second aspect. For example, the computer programs or instructions are executed by a processor.

In a twelfth aspect, a computer program product is provided in the disclosure. The computer program product includes computer programs or instructions which, when executed, are operable to implement steps in the method in the first aspect or the second aspect. For example, the computer programs or instructions are executed by a processor.

In a thirteenth aspect, a communication system is provided in the disclosure. The communication system includes the terminal device in the seventh aspect and the network device in the eighth aspect.

For advantages of technical solutions of the second aspect to the thirteenth aspect, reference can be made to the advantages of technical solutions of the first aspect, which are not repeated herein.

### BRIEF DESCRIPTION OF THE DRAWINGS

To describe technical solutions of embodiments of the disclosure more clearly, the following will briefly introduce accompanying drawings used for describing embodiments or the related art.
FIG. 1 is a schematic architectural diagram of a communication system according to embodiments of the disclosure.
FIG. 2 is a schematic flowchart of a method for multicast broadcast service (MBS) transmission according to embodiments of the disclosure.
FIG. 3 is a block diagram illustrating functional units of an apparatus for MBS transmission according to embodiments of the disclosure.
FIG. 4 is a block diagram illustrating functional units of another apparatus for MBS transmission according to embodiments of the disclosure.
FIG. 5 is a schematic structural diagram of a terminal device according to embodiments of the disclosure.
FIG. 6 is a schematic structural diagram of a network device according to embodiments of the disclosure.

### DETAILED DESCRIPTION

It should be understood that, the terms "first", "second", and the like involved in embodiments of the disclosure are used to distinguish different objects, and are not necessarily used to describe a particular sequence or order. In addition, the terms "include", "comprise", and "have" as well as variations thereof are intended to cover non-exclusive inclusion. For example, a process, method, software, product, or device including a series of steps or units is not limited to the listed steps or units, and instead, it can optionally include other steps or units that are not listed or other steps or units inherent to the process, method, product, or device.

The term "embodiment" referred to in embodiments of the disclosure means that a particular feature, structure, or characteristic described in conjunction with the embodiment may be contained in at least one embodiment of the disclosure. The phrase appearing in various places in the specification does not necessarily refer to the same embodiment, nor does it refer to an independent or alternative embodiment that is mutually exclusive with other embodiments. It is explicitly and implicitly understood by those skilled in the art that an embodiment described herein may be combined with other embodiments.

The term "and/or" in embodiments of the disclosure describes an association relationship between associated objects, and indicates that there may be three relationships, for example, *A* and/or *B* may mean *A* alone, both *A* and *B* exist, and *B* alone. *A* and *B* each may be a singular from or a plural form.

In embodiments of the disclosure, the character "/" herein can indicate that the associated objects are in an "or" relationship. In addition, the symbol "/" may represent a divisor, i. e., perform a division operation. For example, *A*/*B* may mean *A* is divided by *B.*

The term "at least one (item) of" or the like in embodiments of the disclosure refers to any combination of these items, including any combination of a single item or multiple items, and refers to one or multiple items. For example, at least one (item) of *a, b,* or *c* can represent the following seven cases: *a*; *b; c; a* and *b; a* and c; *b* and *c*; *a, b,* and *c*. *a, b,* and c each may be an element or a set including one or more elements.

The term "equal to" in embodiments of the disclosure can be used in conjunction with "greater than" and applicable to the technical solution used in the case of "greater than", or can be used in conjunction with "less than" and applicable to the technical solution used in the case of "less than". When "equal to" is used in conjunction with "greater than", "equal to" cannot be used in conjunction with "less than"; and when "equal to" is used in conjunction with "less than", "equal to" cannot be used in conjunction with "greater than".

The terms "of", "corresponding/relevant", and "indicated" in embodiments of the disclosure may sometimes be used interchangeably, and it should be noted that, when the difference therebetween is not emphasized, the meanings thereof are the same.

In embodiments of the disclosure, "configure" and "provide" may be expressed as the same concept.

The "connection" in embodiments of the disclosure refers to various manners of connection, such as direct connection or indirect connection, so as to implement communication between devices, which is not limited herein.

The terms "network" and "system" in embodiments of the disclosure can be expressed as the same concept, and a communication system is a communication network.

Related contents, concepts, meanings, technical problems, technical solutions, advantages, and the like involved in embodiments of the disclosure are described below.

### I. Communication system, terminal device, and network device

### 1. Communication system

The technical solutions of embodiments of the disclosure may be applied to various communication systems, for example, a general packet radio service (GPRS), a long term evolution (LTE) system, an advanced long term evolution (LTE-A) system, a new radio (NR) system, an evolved system of the NR system, an LTE-based access to unlicensed spectrum (LTE-U) system, and an NR-based access to unlicensed spectrum (NR-U) system, a non-terrestrial network (NTN) system, a universal mobile telecommunication system (UMTS), a wireless local area networks (WLAN), a wireless fidelity (Wi-Fi), the 6^{th}-generation (6G) communication system, or other communication systems.

It should be noted that, a conventional communication system supports a limited number of connections and therefore is easy to implement. However, with development of communication technology, a mobile communication system will not only support conventional communication but also support, for example, device to device (D2D) communication, machine to machine (M2M) communication, machine type communication (MTC), vehicle to vehicle (V2V) communication, vehicle to everything (V2X) communication, narrowband internet of things (NB-IoT) communication, etc. Embodiments of the disclosure can also be applied to these communication systems.

In addition, the technical solutions of embodiments of the disclosure may be applied to a beamforming scenario, a carrier aggregation (CA) scenario, a dual connectivity (DC) scenario, or a standalone (SA) network deployment scenario.

In embodiments of the disclosure, the spectrum used for communication between a terminal device and a network device, or the spectrum used for communication between terminal devices may be a licensed spectrum or an unlicensed spectrum, which is not limited herein. In addition, an unlicensed spectrum may be understood as a shared spectrum, and a licensed spectrum may be understood as a non-shared spectrum.

Since in embodiments of the disclosure, various embodiments are described with reference to a terminal device and a network device, the terminal device and the network device involved will be described in detail below.

### 2. Terminal device

The terminal device may be a device having transceiver functions. The terminal device may also be referred to as a user equipment (UE), a remote UE, a relay UE, an access terminal device, a subscriber unit, a subscriber station, a mobile station, a remote station, a remote station, a mobile device, a user terminal device, a smart terminal device, a wireless communication device, a user agent, or a user apparatus. It should be noted that the relay UE is a terminal device that can provide relay forwarding service for other terminal devices (including a remote terminal device).

For example, the terminal device may be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, or a wireless terminal device in smart home, etc.

For another example, the terminal device may be a cellular radio telephone, a cordless telephone, a session initiation protocol (SIP) telephone, a wireless local loop (WLL) station, a personal digital assistant (PDA), various devices with wireless communication functions such as a handheld device, a computing device, or other processing devices coupled with a wireless modem, an in-vehicle device, a wearable device, and a terminal device in a next-generation communication system, for example, a terminal device in an NR communication system or in a 6G communication system, or a terminal device in a future evolved public land mobile network (PLMN), etc., which is not specifically limited herein.

In some possible implementations, the terminal device may be deployed on land, which includes indoor or outdoor, handheld, wearable, or in-vehicle. The terminal device may also be deployed on water (such as ships, etc.). The terminal device may also be deployed in the air (such as airplanes, balloons, satellites, etc.).

In some possible implementations, the terminal device may include an apparatus with wireless communication functions, such as a system-on-chip (SOC), a chip, or a chip module. Exemplarily, the SOC may include a chip, and may further include other discrete components.

### 3. Network device

The network device may be a device having transceiver function, and is configured to communicate with a terminal device.

In some possible implementations, the network device may be responsible for radio resource management (RRM), quality of service (QoS) management, data compression and encryption, data transmission and reception, etc. at an air-interface side.

In some possible implementations, the network device may be a base station (BS) in a communication system or a device which is deployed in a radio access network (RAN) and used for providing wireless communication functions.

For example, the network device may be an evolved node B (eNB or eNodeB) in an LTE communication system, a next-generation evolved node B (ng-eNB) in an NR communication system, a next-generation node B (gNB) in an NR communication system, a master node (MN) in a DC architecture, a second node or a secondary node (SN) in a DC architecture, and the like, which is not specifically limited herein.

In some possible implementations, the network device may also be a device in a core network (CN), such as an access and mobility management function (AMF), a user plane function (UPF), etc.; or may be an access point (AP) in a WLAN, a relay station, a communication device in a future evolved PLMN network, a communication device in an NTN network, and the like.

In some possible implementations, the network device may include an apparatus for providing wireless communication functions for the terminal device, such as an SOC, a chip, a chip module. For example, the SOC may include a chip, or may include other discrete devices.

In some possible implementations, the network device may communicate with an internet protocol (IP) network, for example, the internet, a private IP network, or other data network, etc.

In some possible implementations, the network device may be an independent node to implement the functions of the foregoing base station, or the network device may include two or more independent nodes to implement the functions of the foregoing base station. For example, the network device may a centralized unit (CU) and a DU, such as a gNB-CU and a gNB-DU. Further, in other embodiments of the disclosure, the network device may further include an active antenna unit (AAU). The CU implements some functions of the network device, and the DU implements some other functions of the network device. For example, the CU is responsible for processing non-real-time protocols and services, and implements functions of a radio resource control (RRC) layer, functions of a service data adaptation protocol (SDAP) layer, functions of a packet data convergence protocol (PDCP) layer. The DU is responsible for processing physical (PHY) layer protocols and real-time services, and implements functions of a radio link control (RLC) layer, functions of a medium access control (MAC) layer, and functions of a PHY layer. In addition, AAU can implement some PHY layer processing functions, radio frequency processing functions, and active-antenna related functions. Since RRC layer information will eventually become PHY layer information, or is transformed from PHY layer information, in this architecture, it may be considered that higher-layer signaling, such as RRC layer signaling, is generated by the CU and transmitted by the DU or transmitted by the DU and the AAU. It can be understood that, the network device may include at least one of the CU, the DU, or the AAU. In addition, the CU may be categorized as a network device in a RAN, or may be categorized as a network device in a CN, and the disclosure is not limited in this regard.

In some possible implementations, the network device may be any one of multiple stations that perform coherent joint transmission (CJT) with the terminal device, another station other than the multiple stations, or another network device for performing network communication with the terminal device, which is not limited herein. Multi-station coherent joint transmission may be joint coherent transmission of multiple stations, transmission of different data belonging to the same physical downlink shared channel (PDSCH) from different stations to the terminal device, or transmission by multiple stations virtualized into one station. Names with the same meaning specified in other standards are also applicable to the disclosure. That is, the names of these parameters are not limited in the disclosure. The station in multi-station coherent joint transmission may be a remote radio head (RRH), a transmission and reception point (TRP), a network device, etc., which is not limited herein.

In some possible implementations, the network device may be any one of multiple stations that perform incoherent joint transmission with the terminal device, another station other than the multiple stations, or another network device that performs network communication with the terminal device, which is not limited herein. Multi-station incoherent joint transmission may be joint incoherent transmission of multiple stations, transmission of different data belonging to the same PDSCH from different stations to the terminal device, or transmission of different data belonging to the same PDSCH from different stations to the terminal device. Names with the same meaning specified in other standards are also applicable to the disclosure. That is, the names of these parameters are not limited in the disclosure. The station in multi-station incoherent joint transmission may be a RRH, a TRP, a network device, etc., which is not limited herein.

In some possible implementations, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In some possible implementations, the network device may provide services for a cell. The terminal device in the cell can communicate with the network device through transmission resources, such as spectrum resources. The cell may be a macro cell, a small cell, a metro cell, a micro cell, a pico cell, a femto cell, etc.

### 4. Exemplary illustration

The communication system in embodiments of the disclosure is exemplified below.

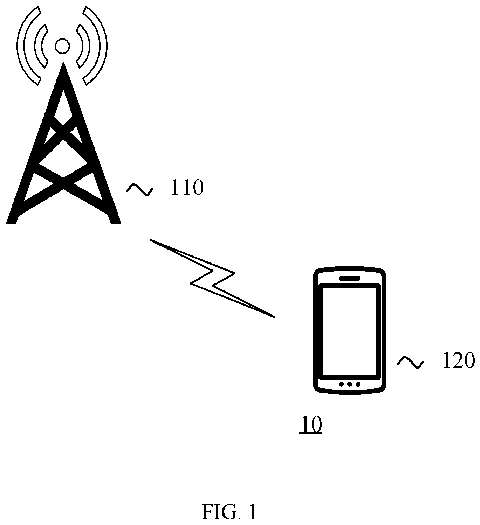

Exemplarily, referring to FIG. 1, a network architecture of a communication system in embodiments of the disclosure is illustrated. As illustrated in FIG. 1, the communication system 10 may include a network device 110 and a terminal device 120. The network device 110 can communicate with the terminal device 120.

FIG. 1 only illustrates an example of the network architecture of the communication system, and does not constitute a limitation on the network architecture of the communication system in embodiments of the disclosure. For example, in embodiments of the disclosure, the communication system 10 may further include a server or other devices. For another example, in embodiments of the disclosure, the communication system 10 may include multiple network devices and/or multiple terminal devices.

### II. Multicast broadcast service (MBS)

An MBS may include an MBS broadcast and an MBS multicast, where the MBS broadcast may mean that the MBS is transmitted in a broadcast mode, and the MBS multicast may mean that the MBS is transmitted in a multicast mode.

For MBS broadcast, a terminal device capable of MBS broadcast reception may or may not have a valid version of system information (SI), such as system information block 20 (SIB 20) and SIB 21, regardless of a radio resource control (RRC) state that the terminal device is in.

For an MBS broadcast, SIB 20 may carry *cfr-ConfigMCCH-MTCH* information, where the *cfr-ConfigMCCH-MTCH* information may be used for configuring a frequency-domain resource for the MBS broadcast, and the frequency-domain resource for the MBS broadcast may also be a common frequency resource (CFR) used for multicast control channel (MCCH) reception and multicast traffic channel (MTCH) reception.

For MBS broadcast, an MCCH may carry an *MBSBroadcastConfiguration* message, and the *MBSBroadcastConfiguration* message may contain an MBS broadcast session provided in a cell and scheduling related information for the session. Optionally, the *MBSBroadcastConfiguration* message may also contain a list of neighbour cells providing the same broadcast MBS service as that provided in the current cell. Configuration information required by the terminal device to receive the MCCH is provided in SIB 20. In addition, SI also provides information related to service continuity of MBS broadcast in SIB 21.

### III. Enhanced MBS transmission

If the bandwidth of a frequency-domain resource for an MBS broadcast exceeds 20 megahertz (MHz), since capabilities of different types of terminal devices are different, there may be a type of terminal device that does not support using the frequency-domain resource for the MBS broadcast, and as a result, such type of terminal device is unable to perform MBS broadcast transmission.

It should be noted that, the "MBS broadcast transmission" in embodiments of the disclosure may be understood as reception of the MBS broadcast or sending of the MBS broadcast. That is, the "transmission" described in embodiments of the disclosure may be reception or sending.

To this end, in order to ensure that such type of terminal device can perform MBS broadcast transmission, in embodiments of the disclosure, first information is introduced for such type of terminal device, where the first information may include information related to an MBS broadcast supported by such type of terminal device, and the first information is sent to such type of terminal device by a network device.

In this way, after receiving the first information, such type of terminal device can perform MBS broadcast transmission according to the first information, thereby realizing enhanced MBS transmission with aid of the first information, and thus improving compatibility and stability of network transmission.

The technical solutions, advantages, concepts, and the like involved in embodiments of the disclosure will be described in detail below.

### 1. First-type terminal device and second-type terminal device

It should be noted that, if the bandwidth of a frequency-domain resource for an MBS broadcast exceeds 20 MHz, since capabilities of different types of terminal devices are different, there may be a type of terminal device that does not support using the frequency-domain resource for the MBS broadcast and another type of terminal device that supports using the frequency-domain resource for the MBS broadcast. As a result, the former type of terminal device is unable to perform MBS broadcast transmission, while the latter type of terminal device is able to perform MBS broadcast transmission.

For ease of differentiation and illustration, with reference to the foregoing "2. terminal device", a first-type terminal device and a second-type terminal device are introduced in embodiments of the disclosure. The first-type terminal device and the second-type terminal device each are essentially a terminal device, but have different capabilities in the maximum bandwidth supported, and the two types of terminal devices may also be illustrated in other terms, which is not specifically limited herein.

Specifically, the maximum bandwidth supported by the first-type terminal device is 20 MHz. Therefore, if the bandwidth of a frequency-domain resource for an MBS broadcast configured via SIB 20 exceeds 20 MHz, the first-type terminal device may be unable to support using the frequency-domain resource for the MBS broadcast.

Specifically, the maximum bandwidth supported by the second-type terminal device is not restricted to 20 MHz. Therefore, if the bandwidth of a frequency-domain resource for an MBS broadcast configured via SIB 20 exceeds 20 MHz, the second-type terminal device may still support using the frequency-domain resource for the MBS broadcast.

In some possible implementations, the first-type terminal device may include a terminal device with reduced capability (also referred to as RedCap UE).

In some possible implementations, the second-type terminal device may include a terminal device with non-reduced capability (also referred to as non-RedCap UE).

In some possible implementations, the bandwidth of a frequency-domain resource for an MBS broadcast configured via the *cfr-ConfigMCCH-MTCH* information in SIB 20 may or may not exceed 20 MHz. Therefore, if the bandwidth of the configured frequency-domain resource for the MBS broadcast exceeds 20 MHz, the first-type terminal device may be unable to support using the frequency-domain resource for the MBS broadcast to perform MBS transmission, while the second-type terminal device may support using the frequency-domain resource for the MBS broadcast to perform MBS transmission.

### 2. First Information

### 1) Elaboration

In order to ensure that the first-type terminal device can perform MBS broadcast transmission, in embodiments of the disclosure, first information is introduced for such type of terminal device, where the first information can include information related to an MBS broadcast supported by the first-type terminal device.

The first information may also be described in other terms, which is not specifically limited herein.

It should be noted that, the first information may be information except the *cfr-ConfigMCCH-MTCH* information in SIB 20.

### 2) Information in the first information

It should be noted that, the first information may include at least one of: MCCH configuration information, MBS broadcast configuration information, control resource set (CORESET) information, channel information, first indication information, second indication information, etc.

### ① MCCH configuration information

The MCCH configuration information can be used for configuring an MCCH.

In some possible implementations, the MCCH configuration information may include at least one of: a length and an offset of an MCCH repetition period, a duration of an MCCT transmission window, and a starting time-domain location of the MCCT transmission window.

### ② MBS broadcast configuration information

The MBS broadcast configuration information may be used for configuring an MBS broadcast and may be carried on an MCCH.

In some possible implementations, the MBS broadcast configuration information may include at least one of: an MBS session(s) provided by an MBS broadcast in the current cell, configuration/scheduling information for each MBS session provided by the MBS broadcast in the current cell, a list of neighbour cells providing the same MBS broadcast service as that provided in the current cell, etc.

### ③ CORESET information

The control resource set information can indicate an additional common CORESET, and the additional common CORESET can be configured and used for *searchSpaceMCCH* / *searchSpaceMTCH* or a terminal device-specific search space (UE-specific search space) in a bandwidth part (BWP) where *searchSpaceMCCH* is configured.

### ④ Channel information

The channel information may include PDSCH information for an MTCH and/or PDSCH information for an MCCH, where the PDSCH information for an MTCH may indicate a PDSCH parameter used for MTCH reception, and the PDSCH information for an MCCH may indicate a PDSCH parameter used for MCCH reception.

### ⑤ First indication information

The first indication information may indicate a frequency-domain resource for the MBS broadcast supported by the first-type terminal device.

It should be noted that, the frequency-domain resource for the MBS broadcast supported by the first-type terminal device indicated by the first indication information may be implemented in following two cases:

### Case 1:

### a. Elaboration

In "Case 1", the network device may configure for the first-type terminal device the frequency-domain resource for the MBS broadcast supported by the first-type terminal device, and indicate the configured frequency-domain resource via the first indication information.

In this way, the first-type terminal device may obtain the frequency-domain resource for the MBS broadcast according to the first indication information, and perform MBS broadcast transmission on the frequency-domain resource for the MBS broadcast, thereby realizing enhanced MBS transmission.

### b. Implementation

In some possible implementations, the network device may configure for the first-type terminal device a starting frequency-domain location and/or a size of the frequency-domain resource for the MBS broadcast supported by the first-type terminal device.

For example, the network device configures a starting physical resource block (PRB) and the number of PRBs of the frequency-domain resource for the MBS broadcast.

### Case 2:

### a. Elaboration

In "Case 2", in order to ensure communication between the network device and the terminal device, the network device may configure various types of frequency-domain resources for the terminal device via higher-layer information/higher-layer signaling/a higher-layer parameter, etc.

In this case, the network device may indicate, via the first indication information, which frequency-domain resources configured can be used as the frequency-domain resource for the MBS broadcast supported by the first-type terminal device, instead of configuring for the first-type terminal device the frequency-domain resource for the MBS broadcast supported by the first-type terminal device.

In this way, by indicating which frequency-domain resources configured are used as the frequency-domain resource for the MBS broadcast, it is conducive not only to improving compatibility and flexibility of network transmission, but also to realizing enhanced MBS transmission.

### b. Implementation

There may be multiple implementations with regard to "Case 2", and these implementations may be alternative implementations, or may be implementations that are associated with each other, or may be combined with each other to obtain a new implementation, which is not specifically limited herein.

### Implementation 1:

In some possible implementations, the frequency-domain resource for the MBS broadcast supported by the first-type terminal device may include one of: a CORESET, a frequency-domain resource in the CORESET, an initial downlink (DL) BWP configured via SIB 1, or a frequency-domain resource in the initial DL BWP configured via SIB 1.

It can be understood that, the network device may indicate to use one of the CORESET, the frequency-domain resource in the CORESET, the initial DL BWP configured via SIB 1, or the frequency-domain resource in the initial DL BWP configured via SIB 1 as the frequency-domain resource for the MBS broadcast supported by the first-type terminal device.

Optionally, the CORESET may include CORESET 0 or CORESETs with other indexes, where CORESET 0 is used as the frequency-domain resource for the MBS broadcast, which is easy for implementation.

Optionally, the frequency-domain resource in the CORESET may include a frequency-domain resource in CORESET 0 or a frequency-domain resource(s) in the CORESETs with other indexes.

In addition, it should be noted that, hereinafter, "the frequency-domain resource for the MBS broadcast includes the CORESET" in embodiments of the disclosure may mean that the frequency-domain resource for the MBS broadcast includes the frequency-domain resource in the CORESET.

Likewise, "the frequency-domain resource for the MBS broadcast includes the initial DL BWP configured via SIB 1" may be mean that the frequency-domain resource for the MBS broadcast includes the initial DL BWP configured via SIB 1 and includes the frequency-domain resource in the initial DL BWP configured via SIB 1, which is not specifically limited herein.

### Implementation 2:

It should be noted that, considering resource utilization, resource shortage, restriction on resource allocation, transmission requirements of the terminal device, and the transmission capability of the terminal device, for the first-type terminal device and the second-type terminal device, the network device can flexibly indicate whether the frequency-domain resource for the MBS broadcast supported by the first-type terminal device is the same as a frequency-domain resource for an MBS broadcast supported by the second-type terminal device.

Therefore, the frequency-domain resource for the MBS broadcast supported by the first-type terminal device may or may not be the same as the frequency-domain resource for the MBS broadcast supported by the second-type terminal device, thereby improving flexibility and reliability of network transmission.

"The frequency-domain resource for the MBS broadcast supported by the first-type terminal device is the same as the frequency-domain resource for the MBS broadcast supported by the second-type terminal device" can mean that the first-type terminal device and the second-type terminal device share the same frequency-domain resource for an MBS broadcast.

In some possible implementations, if the frequency-domain resource for the MBS broadcast supported by the first-type terminal device is the same as the frequency-domain resource for the MBS broadcast supported by the second-type terminal device, the frequency-domain resource for the MBS broadcast supported by the first-type terminal device may include one of: CORESET 0, CORESETs with other indexes, the frequency-domain resource in CORESET 0, or the frequency-domain resource in CORESETs with other indexes.

It can be understood that, if the frequency-domain resource for the MBS broadcast supported by the first-type terminal device is the same as the frequency-domain resource for the MBS broadcast supported by the second-type terminal device, the network device may indicate to use one of CORESET 0, the CORESETs with other indexes, the frequency-domain resource in CORESET 0, the frequency-domain resource in the CORESETs with other indexes, etc. as the frequency-domain resource for the MBS broadcast supported by the first-type terminal device, which is easy for implementation.

In some possible implementations, if the frequency-domain resource for the MBS broadcast supported by the first-type terminal device is the same as the frequency-domain resource for the MBS broadcast supported by the second-type terminal device, the frequency-domain resource for the MBS broadcast supported by the first-type terminal device may include one of: a CORESET, a frequency-domain resource in the CORESET, an initial DL BWP configured via SIB 1, or a frequency-domain resource in the initial DL BWP configured via SIB1.

### Implementation 3:

It should be noted that, the network device may indicate, via the same first indication information, both the frequency-domain resource for the MBS broadcast supported by the first-type terminal device and a frequency-domain resource for an MBS broadcast supported by the second-type terminal device. The frequency-domain resource for the MBS broadcast supported by the first-type terminal device may be the same as or different from the frequency-domain resource for the MBS broadcast supported by the second-type terminal device, which is determined according to actual communication requirements.

In some possible implementations, if the same first indication information indicates both the frequency-domain resource for the MBS broadcast supported by the first-type terminal device and the frequency-domain resource for the MBS broadcast supported by the second-type terminal device, the frequency-domain resource for the MBS broadcast supported by the first-type terminal device includes one of: CORESET 0, CORESETs with other indexes, a frequency-domain resource in CORESET 0, a frequency-domain resource(s) in the CORESETs with other indexes, etc.

It can be appreciated that, if the first indication information indicates both the frequency-domain resource for the MBS broadcast supported by the first-type terminal device and the frequency-domain resource for the MBS broadcast supported by the second-type terminal device, through indication by the network device/protocol definition/pre-configuration, one of CORESET 0, the CORESETs with other indexes, the frequency-domain resource in CORESET 0, or the frequency-domain resource in CORESETs with other indexes is taken as the frequency-domain resource for the MBS broadcast supported by the first-type terminal device, which is easy for implementation.

### ⑥ Second indication information

The second indication information may indicate all or some of information applicable to the first-type terminal device in SIB 20 except resource configuration information, where the resource configuration information is used for configuring a frequency-domain resource for an MBS broadcast.

It should be noted that, in addition to the resource configuration information, SIB 20 may further contain other information used for MBS broadcast. Although the first-type terminal device does not support using the frequency-domain resource for the MBS broadcast configured via the resource configuration information in SIB 20, information required by the first-type terminal device to perform MBS broadcast may be configured directly via all or some of information in SIB 20 except the resource configuration information. Which piece(s) of the information in SIB 20 except the resource configuration information can be applied to the first-type terminal device may be indicated by the second indication information, rather than configured via other signaling, thereby saving signaling overhead and ensuring compatibility of network transmission.

In some possible implementations, the information except the resource configuration information may include at least one of: MCCH configuration information, MBS broadcast configuration information, CORESET information, or channel information.

It should be noted that, all the information in the foregoing "① MCCH configuration information", "② MBS broadcast configuration information", "③ CORESET information", and "④ channel information" is configured via separate signaling, while information in the information except the resource configuration information is carried in SIB 20. In this way, the information except the resource configuration information can be configured directly via SIB 20 in order to save signaling overhead.

### 3) Transmission of first information

In embodiments of the disclosure, in order to realize transmission of the first information, the first information may be carried in SI except SIB 20, or may be carried in SIB 20, or may be carried in higher-layer signaling, or may be carried in RRC signaling, or may be carried in medium access control (MAC)-layer signaling (such as MAC control element (MAC CE)). In this way, in embodiments of the disclosure, the first information can be transmitted flexibly according to actual communication requirements.

In some possible implementations, the SI except SIB 20 may include SIB 21 or newly defined SI, so that the first information can be carried in SIB 21 or the newly defined SI, thereby realizing transmission of the first information.

### 3. Exemplary elaboration of a method for MBS transmission

### 1) Elaboration

With reference to the foregoing illustration, the following will describe a method for MBS transmission according to embodiments of the disclosure by using examples. It should be noted that, the network device may be a chip, a chip module, or a communication module, and the terminal device may be a chip, a chip module, or a communication module. That is, the method is applied to the network device or the terminal device, which is not specifically limited herein.

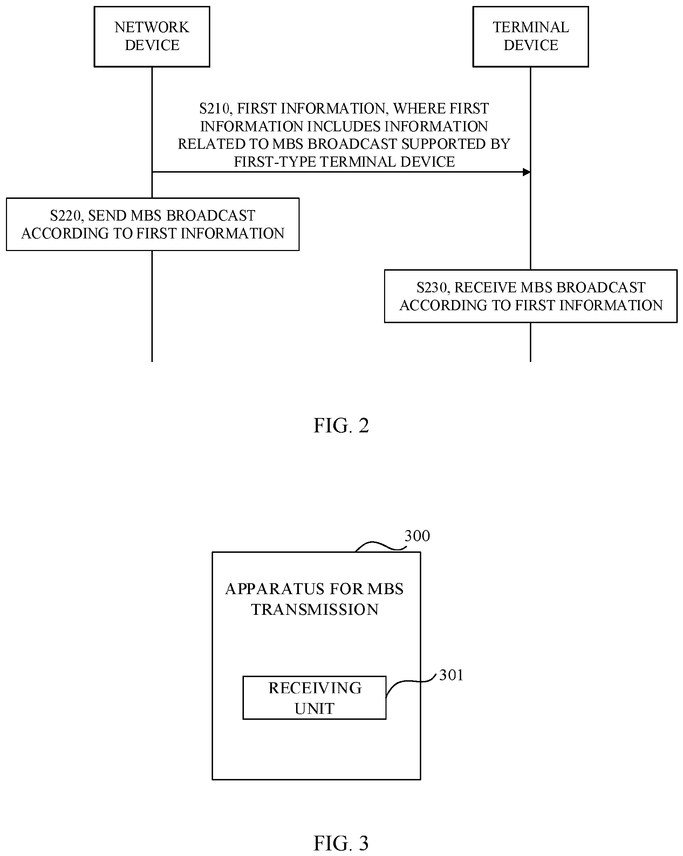

FIG. 2 is a schematic flowchart of a method for MBS transmission according to embodiments of the disclosure. The method specifically includes the following steps.

S210, a network device sends first information, where the first information includes information related to an MBS broadcast supported by a first-type terminal device.

The maximum bandwidth supported by the first-type terminal device is 20 MHz.

Accordingly, a terminal device receives the first information.

The terminal device may be the first-type terminal device.

S220, the network device sends the MBS broadcast according to the first information.

S230, the terminal device receives the MBS broadcast according to the first information.

It should be noted that, for "the first information", "the first-type terminal device", and the like, reference can be made to the foregoing elaborations, which is not described again herein.

It can be seen that, in order to ensure that the first-type terminal device can perform MBS broadcast transmission, in embodiments of the disclosure, the first information is introduced for the first-type terminal device, where the first information may include the information related to the MBS broadcast supported by the first-type terminal device, and the first information is sent to the first-type terminal device by the network device.

In this way, after receiving the first information, the first-type terminal device can perform MBS broadcast transmission according to the first information, thereby realizing enhanced MBS transmission with aid of the first information, and thus improving compatibility and stability of network transmission.

### 2) Some possible implementations

With reference to the foregoing illustration, some possible implementations will be described below. For details not described herein, reference can be made to the foregoing illustration, which will not be described again herein.

In some possible implementations, the first information may include first indication information, and the first indication information may indicate a frequency-domain resource for the MBS broadcast supported by the first-type terminal device.

It should be noted that, with reference to the foregoing "⑤ first indication information", the network device may indicate, via the first indication information, the frequency-domain resource for the MBS broadcast supported by the first-type terminal device, which facilitates realizing MBS broadcast transmission.

In some possible implementations, the frequency-domain resource for the MBS broadcast supported by the first-type terminal device may include one of: CORESET 0, a frequency-domain resource in a CORESET, an initial DL BWP configured via SIB 1, or a frequency-domain resource in the initial DL BWP configured via SIB 1.

It should be noted that, with reference to "Case 2" in the foregoing "⑤ first indication information", the network device may indicate, via the first indication information, to use one of CORESETO, the frequency-domain resource in the CORESET, the initial DL BWP configured via SIB 1, or the frequency-domain resource in the initial DL BWP configured via SIB 1 as the frequency-domain resource for the MBS broadcast supported by the first-type terminal device. In this way, the configured frequency-domain resource can be used as the frequency-domain resource for the MBS broadcast, which is conducive not only to improving compatibility and flexibility of network transmission, but also to realizing enhanced MBS transmission.

In some possible implementations, the frequency-domain resource for the MBS broadcast supported by the first-type terminal device may be the same as a frequency-domain resource for an MBS broadcast supported by a second-type terminal device. Alternatively, the frequency-domain resource for the MBS broadcast supported by the first-type terminal device may not be the same as the frequency-domain resource for the MBS broadcast supported by the second-type terminal device.

It should be noted that, with reference to "Implementation 2" in the foregoing "⑤ first indication information", considering resource utilization, resource shortage, restriction on resource allocation, transmission requirements of the terminal device, and the transmission capability of the terminal device, for the first-type terminal device and the second-type terminal device, the network device can flexibly indicate whether the frequency-domain resource for the MBS broadcast supported by the first-type terminal device is the same as the frequency-domain resource for the MBS broadcast supported by the second-type terminal device.

Therefore, the frequency-domain resource for the MBS broadcast supported by the first-type terminal device may or may not be the same as the frequency-domain resource for the MBS broadcast supported by the second-type terminal device, thereby improving flexibility and reliability of network transmission.

In some possible implementations, if the frequency-domain resource for the MBS broadcast supported by the first-type terminal device is the same as the frequency-domain resource for the MBS broadcast supported by the second-type terminal device, the frequency-domain resource for the MBS broadcast supported by the first-type terminal device may include CORESET 0.

It should be noted that, with reference to "Implementation 2" in the foregoing "⑤ first indication information", if the frequency-domain resource for the MBS broadcast supported by the first-type terminal device is the same as the frequency-domain resource for the MBS broadcast supported by the second-type terminal device, through indication by the network device/protocol definition/pre-configuration, CORESET 0 or CORESETs with other indexes is taken as the frequency-domain resource for the MBS broadcast supported by the first-type terminal device, which is easy for implementation.

In some possible implementations, if the same first indication information indicates both the frequency-domain resource for the MBS broadcast supported by the first-type terminal device and the frequency-domain resource for the MBS broadcast supported by the second-type terminal device, the frequency-domain resource for the MBS broadcast supported by the first-type terminal device may include CORESET 0.

It should be noted that, with reference to "Implementation 3" in the foregoing "⑤ first indication information", if the first indication information indicates both the frequency-domain resource for the MBS broadcast supported by the first-type terminal device and the frequency-domain resource for the MBS broadcast supported by the second-type terminal device, through indication by the network device/protocol definition/pre-configuration, CORESET 0 or CORESETs with other indexes is taken as the frequency-domain resource for the MBS broadcast supported by the first-type terminal device, which is easy for implementation.

In some possible implementations, the first information may include second indication information, where the second indication information may indicate all or some of information applicable to the first-type terminal device in SIB 20 except resource configuration information.

It should be noted that, with reference to the foregoing "⑥ second indication information", in addition to the resource configuration information, SIB 20 may further contain other information used for MBS broadcast. Although the first-type terminal device does not support using a frequency-domain resource for an MBS broadcast configured via the resource configuration information in SIB 20, information required by the first-type terminal device to perform MBS broadcast may be configured directly via all or some of information in SIB 20 except the resource configuration information. Which piece(s) of the information in SIB 20 except the resource configuration information can be applied to the first-type terminal device may be indicated by the second indication information, rather than configured via other signaling, thereby saving signaling overhead and ensuring compatibility of network transmission.

In some possible implementations, the information except the resource configuration information includes channel information, and the channel information indicates a PDSCH parameter used for MTCH reception, and/or indicates a PDSCH parameter used for MCCH reception.

It should be noted that, with reference to the foregoing "⑥ second indication information", all the information mentioned in the foregoing "① MCCH configuration information", "② MBS broadcast configuration information", "③ CORESET information", and "④ channel information" is configured via separate signaling, while information in the information except the resource configuration information is carried in SIB 20. In this way, the information except the resource configuration information can be configured directly via SIB 20 in order to save signaling overhead.

In some possible implementations, the first information may be carried in SI except SIB 20.

It should be noted that, with reference to the foregoing "3) transmission of first information", in embodiments of the disclosure, the first information may be carried in SI except SIB 20, so as to realize transmission of the first information.

In some possible implementations, the first information may be carried in SIB 20.

It should be noted that, with reference to the foregoing "3) transmission of first information", in embodiments of the disclosure, the first information may be carried in SIB 20, so as to realize transmission of the first information.

In some possible implementations, the SI except SIB 20 may include SIB 21.

It should be noted that, with reference to the foregoing "3) transmission of first information", in embodiments of the disclosure, the first information may be carried in SIB 21, so as to realize transmission of the first information.

### IV. Exemplary elaboration of an apparatus for MBS transmission

### 1. Elaboration

The solutions in embodiments of the disclosure are introduced mainly from the perspective of the method. It may be understood that, in order to realize the foregoing functions, the terminal device or the network device includes corresponding hardware structures and/or software modules for executing respective functions. Those of ordinary skill in the art will appreciate that units and algorithmic operations of various examples described in connection with embodiments herein may be implemented by hardware or by a combination of hardware and computer software. Whether these functions are performed by means of hardware or hardware driven by computer software depends on the application and the design constraints of the associated technical solution. Those skilled in the art may use different methods with regard to each particular application to implement the described functionality, but such methods may not be regarded as lying beyond the scope of the disclosure.

In embodiments of the disclosure, division of functional units of the terminal device or the network device may be implemented according to the foregoing method examples. For example, functional units may be divided to correspond to respective functions, or two or more functions may be integrated into one processing unit. The integrated unit may be implemented in a form of hardware, or may be implemented in a form of software program module. It may be noted that, the division of units in embodiments of the disclosure is illustrative and is only a division of logical functions, and other methods of division may also available in practice.

If an integrated unit is adopted, FIG. 3 is a block diagram illustrating functional units of an apparatus for MBS transmission according to embodiments of the disclosure. The apparatus 300 for MBS transmission includes a receiving unit 301.

In some possible implementations, the receiving unit 301 may be a module unit for processing signals, data, information, and the like, which is not specifically limited herein.

In some possible implementations, the apparatus 300 can further include a storage unit. The storage unit is configured to store computer program codes or instructions executable by the apparatus 300. The storage unit may be a memory.

In some possible implementations, the apparatus 300 may be a chip or chip module.

In some possible implementations, the receiving unit 301 may be integrated into another unit.

For example, the receiving unit 301 may be integrated into a communication unit.

For another example, the receiving unit 301 may be integrated into a processing unit.

It should be noted that the communication unit may be a communication interface, a transceiver, a transceiver circuit, and the like.

The processing unit may be a processor or a controller, such as a baseband processor, a baseband chip, a central processing unit (CPU), a general-purpose processor, a digital signal processor (DSP), an application-specific integrated circuit (ASIC), a field programmable gate array (FPGA), or other programmable logic devices, transistor logic devices, hardware components, or any combination thereof. Various exemplary logic blocks, modules, and circuits disclosed in the disclosure may be implemented or executed. The processing unit may also be a combination for implementing computing functions, for example, one or more microprocessors, a combination of DSP and microprocessor, or the like.

In some possible implementations, the receiving unit 301 is configured to perform any one of the steps implemented by the terminal device/chip/chip module in the foregoing method embodiments, for example, sending or receiving data. Detailed elaboration will be given below.

During implementation, the receiving unit 301 is configured to perform any step in the foregoing method embodiments. When performing an action such as sending, another unit may be selectively invoked to complete a corresponding operation. Detailed elaboration will be given below.

The receiving unit 301 is configured to receive first information, where the first information includes information related to an MBS broadcast supported by a first-type terminal device, and a maximum bandwidth supported by the first-type terminal device is 20 MHz. The receiving unit 301 is further configured to receive the MBS broadcast according to the first information.

It can be seen that, in order to ensure that the first-type terminal device can perform MBS broadcast transmission, in embodiments of the disclosure, the first information is introduced for the first-type terminal device, where the first information may include the information related to the MBS broadcast supported by the first-type terminal device, and the first information is sent to the first-type terminal device by a network device.

In this way, after receiving the first information, the first-type terminal device can perform MBS broadcast transmission according to the first information, thereby realizing enhanced MBS transmission with aid of the first information, and thus improving compatibility and stability of network transmission.

It should be noted that, for the implementation of each operation in the embodiments illustrated in FIG. 3, reference may be made to the elaboration in the foregoing method embodiments, which is not described again herein.

### 2. Some possible implementations

Some possible implementations are described below, and some details may be found from the foregoing elaboration, which are not repeated herein.

In some possible implementations, the first information may include first indication information, and the first indication information may indicate a frequency-domain resource for the MBS broadcast supported by the first-type terminal device.

It should be noted that, with reference to the foregoing "⑤ first indication information", the network device may indicate, via the first indication information, the frequency-domain resource for the MBS broadcast supported by the first-type terminal device, which facilitates realizing MBS broadcast transmission.

In some possible implementations, the frequency-domain resource for the MBS broadcast supported by the first-type terminal device may include one of: CORESET 0, a frequency-domain resource in CORESET 0, an initial DL BWP configured via SIB 1, or a frequency-domain resource in the initial DL BWP configured via SIB 1.

It should be noted that, with reference to "Case 2" in the foregoing "⑤ first indication information", the network device may indicate, via the first indication information, to use one of CORESETO, the frequency-domain resource in CORESET 0, the initial DL BWP configured via SIB 1, or the frequency-domain resource in the initial DL BWP configured via SIB 1 as the frequency-domain resource for the MBS broadcast supported by the first-type terminal device. In this way, the configured frequency-domain resource can be used as the frequency-domain resource for the MBS broadcast, which is conducive not only to improving compatibility and flexibility of network transmission, but also to realizing enhanced MBS transmission.

In some possible implementations, the frequency-domain resource for the MBS broadcast supported by the first-type terminal device may be the same as a frequency-domain resource for an MBS broadcast supported by a second-type terminal device. Alternatively, the frequency-domain resource for the MBS broadcast supported by the first-type terminal device may not be the same as the frequency-domain resource for the MBS broadcast supported by the second-type terminal device.

It should be noted that, with reference to "Implementation 2" in the foregoing "⑤ first indication information", considering resource utilization, resource shortage, restriction on resource allocation, transmission requirements of the terminal device, and the transmission capability of the terminal device, for the first-type terminal device and the second-type terminal device, the network device can flexibly indicate whether the frequency-domain resource for the MBS broadcast supported by the first-type terminal device is the same as the frequency-domain resource for the MBS broadcast supported by the second-type terminal device.

Therefore, the frequency-domain resource for the MBS broadcast supported by the first-type terminal device may or may not be the same as the frequency-domain resource for the MBS broadcast supported by the second-type terminal device, thereby improving flexibility and reliability of network transmission.

In some possible implementations, if the frequency-domain resource for the MBS broadcast supported by the first-type terminal device is the same as the frequency-domain resource for the MBS broadcast supported by the second-type terminal device, the frequency-domain resource for the MBS broadcast supported by the first-type terminal device may include CORESET 0.

It should be noted that, with reference to "Implementation 2" in the foregoing "⑤ first indication information", if the frequency-domain resource for the MBS broadcast supported by the first-type terminal device is the same as the frequency-domain resource for the MBS broadcast supported by the second-type terminal device, the network device may indicate to use CORESET 0 or CORESETs with other indexes as the frequency-domain resource for the MBS broadcast supported by the first-type terminal device, which is easy for implementation.

In some possible implementations, if the same first indication information indicates both the frequency-domain resource for the MBS broadcast supported by the first-type terminal device and the frequency-domain resource for the MBS broadcast supported by the second-type terminal device, the frequency-domain resource for the MBS broadcast supported by the first-type terminal device may include CORESET 0.

It should be noted that, with reference to "Implementation 3" in the foregoing "⑤ first indication information", if the first indication information indicates both the frequency-domain resource for the MBS broadcast supported by the first-type terminal device and the frequency-domain resource for the MBS broadcast supported by the second-type terminal device, the network device may indicate to use CORESET 0 or CORESETs with other indexes as the frequency-domain resource for the MBS broadcast supported by the first-type terminal device, which is easy for implementation.

In some possible implementations, the first information may include second indication information, where the second indication information may indicate all or some of information applicable to the first-type terminal device in SIB 20 except resource configuration information.

It should be noted that, with reference to the foregoing "⑥ second indication information", in addition to the resource configuration information, SIB 20 may further contain other information used for MBS broadcast. Although the first-type terminal device does not support using a frequency-domain resource for an MBS broadcast configured via the resource configuration information in SIB 20, information required by the first-type terminal device to perform MBS broadcast may be configured directly via all or some of information in SIB 20 except the resource configuration information. Which piece(s) of the information in SIB 20 except the resource configuration information can be applied to the first-type terminal device may be indicated by the second indication information, rather than configured via other signaling, thereby saving signaling overhead and ensuring compatibility of network transmission.

In some possible implementations, the information except the resource configuration information includes channel information, and the channel information indicates a PDSCH parameter used for MTCH reception, and/or indicates a PDSCH parameter used for MCCH reception.

It should be noted that, with reference to the foregoing "⑥ second indication information", all the information mentioned in the foregoing "① MCCH configuration information", "② MBS broadcast configuration information", "③ CORESET information", and "④ channel information" is configured via separate signaling, while information in the information except the resource configuration information is carried in SIB 20. In this way, the information except the resource configuration information can be configured directly via SIB 20 in order to save signaling overhead.

In some possible implementations, the first information may be carried in SI except SIB 20.

It should be noted that, with reference to the foregoing "3) transmission of first information", in embodiments of the disclosure, the first information may be carried in SI except SIB 20, so as to realize transmission of the first information.

In some possible implementations, the first information may be carried in SIB 20.

It should be noted that, with reference to the foregoing "3) transmission of first information", in embodiments of the disclosure, the first information may be carried in SIB 20, so as to realize transmission of the first information.

In some possible implementations, the SI except SIB 20 may include SIB 21.

It should be noted that, with reference to the foregoing "3) transmission of first information", in embodiments of the disclosure, the first information may be carried in SIB 21, so as to realize transmission of the first information.

### V. Exemplary illustration of another apparatus for MBS transmission

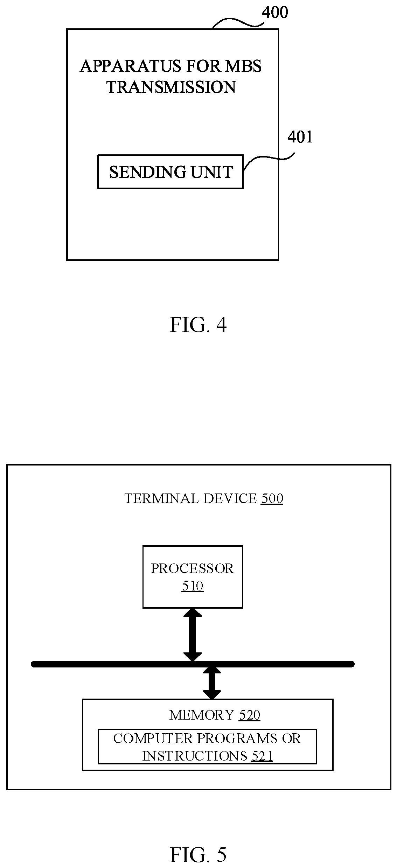

If an integrated unit is adopted, FIG. 4 is a block diagram illustrating functional units of an apparatus for MBS transmission according to embodiments of the disclosure. The apparatus 400 for MBS transmission includes a sending unit 401.

In some possible implementations, the sending unit 401 may be a module unit for processing signals, data, information, and the like, which is not specifically limited herein.

In some possible implementations, the apparatus 400 can further include a storage unit. The storage unit is configured to store computer program codes or instructions executable by the apparatus 400. The storage unit may be a memory.

In some possible implementations, the apparatus 400 may be a chip or chip module.

In some possible implementations, the sending unit 401 may be integrated into another unit.

For example, the sending unit 401 may be integrated into a communication unit. It should be noted that the communication unit may be a communication interface, a transceiver, a transceiver circuit, and the like.

For another example, the sending unit 401 may be integrated into a processing unit.

It should be noted that the processing unit may be a processor or a controller, such as a baseband processor, a baseband chip, a CPU, a general-purpose processor, a DSP, an ASIC, an FPGA, or other programmable logic devices, transistor logic devices, hardware components, or any combination thereof. Various exemplary logic blocks, modules, and circuits disclosed in the disclosure may be implemented or executed. The processing unit may also be a combination for implementing computing functions, for example, one or more microprocessors, a combination of DSP and microprocessor, or the like.

In some possible implementations, the sending unit 401 is configured to configured to perform any one of the steps implemented by the network device/chip/chip module in the foregoing method embodiments, for example, sending or receiving data. Detailed elaboration will be given below.

During implementation, the sending unit 401 is configured to perform any step in the foregoing method embodiments. When performing an action such as sending, another unit may be selectively invoked to complete a corresponding operation. Detailed elaboration will be given below.

The sending unit 401 is configured to send first information, where the first information includes information related to an MBS broadcast supported by a first-type terminal device, and a maximum bandwidth supported by the first-type terminal device is 20 MHz. The sending unit 401 is further configured to send the MBS broadcast according to the first information.

It can be seen that, in order to ensure that the first-type terminal device can perform MBS broadcast transmission, in embodiments of the disclosure, the first information is introduced for the first-type terminal device, where the first information may include the information related to the MBS broadcast supported by the first-type terminal device, and the first information is sent to the first-type terminal device by a network device.

In this way, after receiving the first information, the first-type terminal device can perform MBS broadcast transmission according to the first information, thereby realizing enhanced MBS transmission with aid of the first information, and thus improving compatibility and stability of network transmission.

It should be noted that, for the implementation of each operation in the embodiments illustrated in FIG. 4, reference may be made to the elaboration in the foregoing method embodiments, which is not described again herein.

### 2. Some possible implementations

Some possible implementations are described below, and some details may be found from the foregoing elaboration, which are not repeated herein.

In some possible implementations, the first information may include first indication information, and the first indication information may indicate a frequency-domain resource for the MBS broadcast supported by the first-type terminal device.

It should be noted that, with reference to the foregoing "⑤ first indication information", the network device may indicate, via the first indication information, the frequency-domain resource for the MBS broadcast supported by the first-type terminal device, which facilitates realizing MBS broadcast transmission.

In some possible implementations, the frequency-domain resource for the MBS broadcast supported by the first-type terminal device may include one of: CORESET 0, a frequency-domain resource in CORESET 0, an initial DL BWP configured via SIB 1, or a frequency-domain resource in the initial DL BWP configured via SIB 1.

It should be noted that, with reference to "Case 2" in the foregoing "⑤ first indication information", the network device may indicate, via the first indication information, to use one of CORESETO, the frequency-domain resource in CORESET 0, the initial DL BWP configured via SIB 1, or the frequency-domain resource in the initial DL BWP configured via SIB 1 as the frequency-domain resource for the MBS broadcast supported by the first-type terminal device. In this way, the configured frequency-domain resource can be used as the frequency-domain resource for the MBS broadcast, which is conducive not only to improving compatibility and flexibility of network transmission, but also to realizing enhanced MBS transmission.

In some possible implementations, the frequency-domain resource for the MBS broadcast supported by the first-type terminal device may be the same as a frequency-domain resource for an MBS broadcast supported by a second-type terminal device. Alternatively, the frequency-domain resource for the MBS broadcast supported by the first-type terminal device may not be the same as the frequency-domain resource for the MBS broadcast supported by the second-type terminal device.

It should be noted that, with reference to "Implementation 2" in the foregoing "⑤ first indication information", considering resource utilization, resource shortage, restriction on resource allocation, transmission requirements of the terminal device, and the transmission capability of the terminal device, for the first-type terminal device and the second-type terminal device, the network device can flexibly indicate whether the frequency-domain resource for the MBS broadcast supported by the first-type terminal device is the same as the frequency-domain resource for the MBS broadcast supported by the second-type terminal device.

Therefore, the frequency-domain resource for the MBS broadcast supported by the first-type terminal device may or may not be the same as the frequency-domain resource for the MBS broadcast supported by the second-type terminal device, thereby improving flexibility and reliability of network transmission.

In some possible implementations, if the frequency-domain resource for the MBS broadcast supported by the first-type terminal device is the same as the frequency-domain resource for the MBS broadcast supported by the second-type terminal device, the frequency-domain resource for the MBS broadcast supported by the first-type terminal device may include CORESET 0.

It should be noted that, with reference to "Implementation 2" in the foregoing "⑤ first indication information", if the frequency-domain resource for the MBS broadcast supported by the first-type terminal device is the same as the frequency-domain resource for the MBS broadcast supported by the second-type terminal device, the network device may indicate to use CORESET 0 or CORESETs with other indexes as the frequency-domain resource for the MBS broadcast supported by the first-type terminal device, which is easy for implementation.

In some possible implementations, if the same first indication information indicates both the frequency-domain resource for the MBS broadcast supported by the first-type terminal device and the frequency-domain resource for the MBS broadcast supported by the second-type terminal device, the frequency-domain resource for the MBS broadcast supported by the first-type terminal device may include CORESET 0.

It should be noted that, with reference to "Implementation 3" in the foregoing "⑤ first indication information", if the first indication information indicates both the frequency-domain resource for the MBS broadcast supported by the first-type terminal device and the frequency-domain resource for the MBS broadcast supported by the second-type terminal device, the network device may indicate to use CORESET 0 or CORESETs with other indexes as the frequency-domain resource for the MBS broadcast supported by the first-type terminal device, which is easy for implementation.

In some possible implementations, the first information may include second indication information, where the second indication information may indicate all or some of information applicable to the first-type terminal device in SIB 20 except resource configuration information.

It should be noted that, with reference to the foregoing "⑥ second indication information", in addition to the resource configuration information, SIB 20 may further contain other information used for MBS broadcast. Although the first-type terminal device does not support using a frequency-domain resource for an MBS broadcast configured via the resource configuration information in SIB 20, information required by the first-type terminal device to perform MBS broadcast may be configured directly via all or some of information in SIB 20 except the resource configuration information. Which piece(s) of the information in SIB 20 except the resource configuration information can be applied to the first-type terminal device may be indicated by the second indication information, rather than configured via other signaling, thereby saving signaling overhead and ensuring compatibility of network transmission.

In some possible implementations, the information except the resource configuration information includes channel information, and the channel information indicates a PDSCH parameter used for MTCH reception, and/or indicates a PDSCH parameter used for MCCH reception.

It should be noted that, with reference to the foregoing "⑥ second indication information", all the information mentioned in the foregoing "① MCCH configuration information", "② MBS broadcast configuration information", "③ CORESET information", and "④ channel information" is configured via separate signaling, while information in the information except the resource configuration information is carried in SIB 20. In this way, the information except the resource configuration information can be configured directly via SIB 20 in order to save signaling overhead.

In some possible implementations, the first information may be carried in SI except SIB 20.

It should be noted that, with reference to the foregoing "3) transmission of first information", in embodiments of the disclosure, the first information may be carried in SI except SIB 20, so as to realize transmission of the first information.

In some possible implementations, the first information may be carried in SIB 20.

It should be noted that, with reference to the foregoing "3) transmission of first information", in embodiments of the disclosure, the first information may be carried in SIB 20, so as to realize transmission of the first information.

In some possible implementations, the SI except SIB 20 may include SIB 21.

It should be noted that, with reference to the foregoing "3) transmission of first information", in embodiments of the disclosure, the first information may be carried in SIB 21, so as to realize transmission of the first information.

### VI. Exemplary illustration of a terminal device

Referring to FIG. 5, FIG. 5 is a schematic structural diagram of a terminal device according to embodiments of the disclosure. The terminal device 500 may include a processor 510, a memory 520, and a communication bus that is configured to connect the processor 510 and the memory 520.

In some possible implementations, the memory 520 includes but is not limited to a random access memory (RAM), a read-only memory (ROM), an erasable programmable read-only memory (EPROM), or a compact disc read-only memory (CD-ROM). The memory 520 is configured to store program codes executed by the terminal device 500 and data to be transmitted by the terminal device 500.

In some possible implementations, the terminal device 500 further includes a communication interface for receiving and sending data.

In some possible implementations, the processor 510 may be one or more CPUs. When the processor 510 is one CPU, the CPU may be a single-core CPU, or may be a multi-core CPU.

In some possible implementations, the processor 510 may be a baseband chip, a chip, a CPU, a general-purpose processor, a DSP, an ASIC, an FPGA or other programmable logic devices, transistor logic devices, hardware components, or any combination thereof.

In an implementation, the processor 510 in the terminal device 500 is configured to execute computer programs or instructions 521 stored in the memory 520, to perform the following operations: receiving first information, where the first information includes information related to an MBS broadcast supported by a first-type terminal device, and a maximum bandwidth supported by the first-type terminal device is 20 MHz; and receiving the MBS broadcast according to the first information.

It can be seen that, in order to ensure that the first-type terminal device can perform MBS broadcast transmission, in embodiments of the disclosure, the first information is introduced for the first-type terminal device, where the first information may include the information related to the MBS broadcast supported by the first-type terminal device, and the first information is sent to the first-type terminal device by a network device.

In this way, after receiving the first information, the first-type terminal device can perform MBS broadcast transmission according to the first information, thereby realizing enhanced MBS transmission with aid of the first information, and thus improving compatibility and stability of network transmission.

It should be noted that, for the implementation of each operation, reference may be made to the corresponding elaboration in the foregoing method embodiments, and the terminal device 500 may be configured to perform the foregoing method embodiments of the disclosure, which is not described again herein.

### 2. Some possible implementations

Some possible implementations are described below, and some details may be found from the foregoing elaboration, which are not repeated herein.

In some possible implementations, the first information may include first indication information, and the first indication information may indicate a frequency-domain resource for the MBS broadcast supported by the first-type terminal device.

It should be noted that, with reference to the foregoing "⑤ first indication information", the network device may indicate, via the first indication information, the frequency-domain resource for the MBS broadcast supported by the first-type terminal device, which facilitates realizing MBS broadcast transmission.

In some possible implementations, the frequency-domain resource for the MBS broadcast supported by the first-type terminal device may include one of: CORESET 0, a frequency-domain resource in CORESET 0, an initial DL BWP configured via SIB 1, or a frequency-domain resource in the initial DL BWP configured via SIB 1.

It should be noted that, with reference to "Case 2" in the foregoing "⑤ first indication information", the network device may indicate, via the first indication information, to use one of CORESETO, the frequency-domain resource in CORESET 0, the initial DL BWP configured via SIB 1, or the frequency-domain resource in the initial DL BWP configured via SIB 1 as the frequency-domain resource for the MBS broadcast supported by the first-type terminal device. In this way, the configured frequency-domain resource can be used as the frequency-domain resource for the MBS broadcast, which is conducive not only to improving compatibility and flexibility of network transmission, but also to realizing enhanced MBS transmission.

In some possible implementations, the frequency-domain resource for the MBS broadcast supported by the first-type terminal device may be the same as a frequency-domain resource for an MBS broadcast supported by a second-type terminal device. Alternatively, the frequency-domain resource for the MBS broadcast supported by the first-type terminal device may not be the same as the frequency-domain resource for the MBS broadcast supported by the second-type terminal device.

It should be noted that, with reference to "Implementation 2" in the foregoing "⑤ first indication information", considering resource utilization, resource shortage, restriction on resource allocation, transmission requirements of the terminal device, and the transmission capability of the terminal device, for the first-type terminal device and the second-type terminal device, the network device can flexibly indicate whether the frequency-domain resource for the MBS broadcast supported by the first-type terminal device is the same as the frequency-domain resource for the MBS broadcast supported by the second-type terminal device.

Therefore, the frequency-domain resource for the MBS broadcast supported by the first-type terminal device may or may not be the same as the frequency-domain resource for the MBS broadcast supported by the second-type terminal device, thereby improving flexibility and reliability of network transmission.

In some possible implementations, if the frequency-domain resource for the MBS broadcast supported by the first-type terminal device is the same as the frequency-domain resource for the MBS broadcast supported by the second-type terminal device, the frequency-domain resource for the MBS broadcast supported by the first-type terminal device may include CORESET 0.

It should be noted that, with reference to "Implementation 2" in the foregoing "⑤ first indication information", if the frequency-domain resource for the MBS broadcast supported by the first-type terminal device is the same as the frequency-domain resource for the MBS broadcast supported by the second-type terminal device, the network device may indicate to use CORESET 0 or CORESETs with other indexes as the frequency-domain resource for the MBS broadcast supported by the first-type terminal device, which is easy for implementation.

In some possible implementations, if the same first indication information indicates both the frequency-domain resource for the MBS broadcast supported by the first-type terminal device and the frequency-domain resource for the MBS broadcast supported by the second-type terminal device, the frequency-domain resource for the MBS broadcast supported by the first-type terminal device may include CORESET 0.

It should be noted that, with reference to "Implementation 3" in the foregoing "⑤ first indication information", if the first indication information indicates both the frequency-domain resource for the MBS broadcast supported by the first-type terminal device and the frequency-domain resource for the MBS broadcast supported by the second-type terminal device, the network device may indicate to use CORESET 0 or CORESETs with other indexes as the frequency-domain resource for the MBS broadcast supported by the first-type terminal device, which is easy for implementation.

In some possible implementations, the first information may include second indication information, where the second indication information may indicate all or some of information applicable to the first-type terminal device in SIB 20 except resource configuration information.

It should be noted that, with reference to the foregoing "⑥ second indication information", in addition to the resource configuration information, SIB 20 may further contain other information used for MBS broadcast. Although the first-type terminal device does not support using a frequency-domain resource for an MBS broadcast configured via the resource configuration information in SIB 20, information required by the first-type terminal device to perform MBS broadcast may be configured directly via all or some of information in SIB 20 except the resource configuration information. Which piece(s) of the information in SIB 20 except the resource configuration information can be applied to the first-type terminal device may be indicated by the second indication information, rather than configured via other signaling, thereby saving signaling overhead and ensuring compatibility of network transmission.

In some possible implementations, the information except the resource configuration information includes channel information, and the channel information indicates a PDSCH parameter used for MTCH reception, and/or indicates a PDSCH parameter used for MCCH reception.

It should be noted that, with reference to the foregoing "⑥ second indication information", all the information mentioned in the foregoing "① MCCH configuration information", "② MBS broadcast configuration information", "③ CORESET information", and "④ channel information" is configured via separate signaling, while information in the information except the resource configuration information is carried in SIB 20. In this way, the information except the resource configuration information can be configured directly via SIB 20 in order to save signaling overhead.

In some possible implementations, the first information may be carried in SI except SIB 20.

It should be noted that, with reference to the foregoing "3) transmission of first information", in embodiments of the disclosure, the first information may be carried in SI except SIB 20, so as to realize transmission of the first information.

In some possible implementations, the first information may be carried in SIB 20.

It should be noted that, with reference to the foregoing "3) transmission of first information", in embodiments of the disclosure, the first information may be carried in SIB 20, so as to realize transmission of the first information.

In some possible implementations, the SI except SIB 20 may include SIB 21.

It should be noted that, with reference to the foregoing "3) transmission of first information", in embodiments of the disclosure, the first information may be carried in SIB 21, so as to realize transmission of the first information.

### VII. Exemplary illustration of a network device

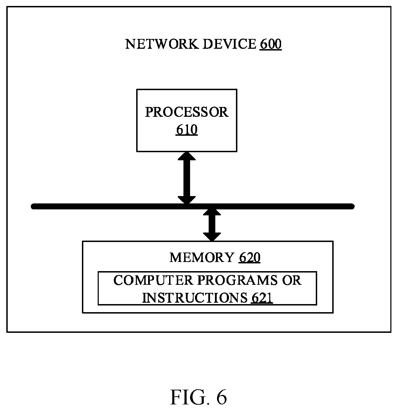

Referring to FIG. 6, FIG. 6 is a schematic structural diagram of a network device according to embodiments of the disclosure. The network device 600 includes a processor 610, a memory 620, and a communication bus configured to connect the processor 610 and the memory 620.

In some possible implementations, the memory 620 includes, but is not limited to, a RAM, a ROM, an EPROM, or a CD-ROM. The memory 620 is configured to store related instructionss and data.

In some possible implementations, the network device 600 further includes a communication interface for receiving and sending data.

In some possible implementations, the processor 610 may be one or more CPUs. When the processor 610 is one CPU, the CPU may be a single-core CPU, or may be a multi-core CPU.

In some possible implementations, the processor 610 may be a baseband chip, a chip, a CPU, a general-purpose processor, a DSP, an ASIC, an FPGA or other programmable logic devices, transistor logic devices, hardware components, or any combination thereof.

In some possible implementations, the processor 610 in the network device 600 is configured to execute computer programs or instructions 621 stored in the memory 620 to perform the following operations: sending first information, where the first information includes information related to an MBS broadcast supported by a first-type terminal device, and a maximum bandwidth supported by the first-type terminal device is 20 MHz; and sending the MBS broadcast according to the first information.

It can be seen that, in order to ensure that the first-type terminal device can perform MBS broadcast transmission, in embodiments of the disclosure, the first information is introduced for the first-type terminal device, where the first information may include the information related to the MBS broadcast supported by the first-type terminal device, and the first information is sent to the first-type terminal device by a network device.

In this way, after receiving the first information, the first-type terminal device can perform MBS broadcast transmission according to the first information, thereby realizing enhanced MBS transmission with aid of the first information, and thus improving compatibility and stability of network transmission.

It should be noted that, for the implementation of each operation, reference may be made to the corresponding elaboration in the foregoing method embodiments, and the network device 600 may be configured to perform the foregoing method embodiments of the disclosure, which is not described again herein.

### 2. Some possible implementations

Some possible implementations are described below, and some details may be found from the foregoing elaboration, which are not repeated herein.

In some possible implementations, the bandwidth of a frequency-domain resource for an MBS broadcast configured via the *cfr-ConfigMCCH-MTCH* information in SIB 20 may or may not exceed 20 MHz. Therefore, if the bandwidth of the configured frequency-domain resource for the MBS broadcast exceeds 20 MHz, the first-type terminal device may be unable to support using the frequency-domain resource for the MBS broadcast to perform MBS transmission, while a second-type terminal device may support using the frequency-domain resource for the MBS broadcast to perform MBS transmission.

In some possible implementations, the first information may include first indication information, and the first indication information may indicate a frequency-domain resource for the MBS broadcast supported by the first-type terminal device.

It should be noted that, with reference to the foregoing "⑤ first indication information", the network device may indicate, via the first indication information, the frequency-domain resource for the MBS broadcast supported by the first-type terminal device, which facilitates realizing MBS broadcast transmission.

In some possible implementations, the frequency-domain resource for the MBS broadcast supported by the first-type terminal device may include one of: CORESET 0, a frequency-domain resource in CORESET 0, an initial DL BWP configured via SIB 1, or a frequency-domain resource in the initial DL BWP configured via SIB 1.

It should be noted that, with reference to "Case 2" in the foregoing "⑤ first indication information", the network device may indicate, via the first indication information, to use one of CORESETO, the frequency-domain resource in CORESET 0, the initial DL BWP configured via SIB 1, or the frequency-domain resource in the initial DL BWP configured via SIB 1 as the frequency-domain resource for the MBS broadcast supported by the first-type terminal device. In this way, the configured frequency-domain resource can be used as the frequency-domain resource for the MBS broadcast, which is conducive not only to improving compatibility and flexibility of network transmission, but also to realizing enhanced MBS transmission.

In some possible implementations, the frequency-domain resource for the MBS broadcast supported by the first-type terminal device may be the same as a frequency-domain resource for an MBS broadcast supported by the second-type terminal device. Alternatively, the frequency-domain resource for the MBS broadcast supported by the first-type terminal device may not be the same as the frequency-domain resource for the MBS broadcast supported by the second-type terminal device.

It should be noted that, with reference to "Implementation 2" in the foregoing "⑤ first indication information", considering resource utilization, resource shortage, restriction on resource allocation, transmission requirements of the terminal device, and the transmission capability of the terminal device, for the first-type terminal device and the second-type terminal device, the network device can flexibly indicate whether the frequency-domain resource for the MBS broadcast supported by the first-type terminal device is the same as the frequency-domain resource for the MBS broadcast supported by the second-type terminal device.

Therefore, the frequency-domain resource for the MBS broadcast supported by the first-type terminal device may or may not be the same as the frequency-domain resource for the MBS broadcast supported by the second-type terminal device, thereby improving flexibility and reliability of network transmission.

In some possible implementations, if the frequency-domain resource for the MBS broadcast supported by the first-type terminal device is the same as the frequency-domain resource for the MBS broadcast supported by the second-type terminal device, the frequency-domain resource for the MBS broadcast supported by the first-type terminal device may include CORESET 0.

It should be noted that, with reference to "Implementation 2" in the foregoing "⑤ first indication information", if the frequency-domain resource for the MBS broadcast supported by the first-type terminal device is the same as the frequency-domain resource for the MBS broadcast supported by the second-type terminal device, the network device may indicate to use CORESET 0 or CORESETs with other indexes as the frequency-domain resource for the MBS broadcast supported by the first-type terminal device, which is easy for implementation.

In some possible implementations, if the same first indication information indicates both the frequency-domain resource for the MBS broadcast supported by the first-type terminal device and the frequency-domain resource for the MBS broadcast supported by the second-type terminal device, the frequency-domain resource for the MBS broadcast supported by the first-type terminal device may include CORESET 0.

It should be noted that, with reference to "Implementation 3" in the foregoing "⑤ first indication information", if the first indication information indicates both the frequency-domain resource for the MBS broadcast supported by the first-type terminal device and the frequency-domain resource for the MBS broadcast supported by the second-type terminal device, the network device may indicate to use CORESET 0 or CORESETs with other indexes as the frequency-domain resource for the MBS broadcast supported by the first-type terminal device, which is easy for implementation.

In some possible implementations, the first information may include second indication information, where the second indication information may indicate all or some of information applicable to the first-type terminal device in SIB 20 except resource configuration information.

It should be noted that, with reference to the foregoing "⑥ second indication information", in addition to the resource configuration information, SIB 20 may further contain other information used for MBS broadcast. Although the first-type terminal device does not support using a frequency-domain resource for an MBS broadcast configured via the resource configuration information in SIB 20, information required by the first-type terminal device to perform MBS broadcast may be configured directly via all or some of information in SIB 20 except the resource configuration information. Which piece(s) of the information in SIB 20 except the resource configuration information can be applied to the first-type terminal device may be indicated by the second indication information, rather than configured via other signaling, thereby saving signaling overhead and ensuring compatibility of network transmission.

In some possible implementations, the information except the resource configuration information includes channel information, and the channel information indicates a PDSCH parameter used for MTCH reception, and/or indicates a PDSCH parameter used for MCCH reception.

It should be noted that, with reference to the foregoing "⑥ second indication information", all the information mentioned in the foregoing "① MCCH configuration information", "② MBS broadcast configuration information", "③ CORESET information", and "④ channel information" is configured via separate signaling, while information in the information except the resource configuration information is carried in SIB 20. In this way, the information except the resource configuration information can be configured directly via SIB 20 in order to save signaling overhead.

In some possible implementations, the first information may be carried in SI except SIB 20.

It should be noted that, with reference to the foregoing "3) transmission of first information", in embodiments of the disclosure, the first information may be carried in SI except SIB 20, so as to realize transmission of the first information.

In some possible implementations, the first information may be carried in SIB 20.

It should be noted that, with reference to the foregoing "3) transmission of first information", in embodiments of the disclosure, the first information may be carried in SIB 20, so as to realize transmission of the first information.

In some possible implementations, the SI except SIB 20 may include SIB 21.

It should be noted that, with reference to the foregoing "3) transmission of first information", in embodiments of the disclosure, the first information may be carried in SIB 21, so as to realize transmission of the first information.

### VIII. Other related exemplary illustrations

In some possible implementations, the above method embodiments may be applied to or in a terminal device. That is, the execution entity of the above method embodiments may be a terminal device, a chip, a chip module, or a module, etc., which is not limited herein.

In some possible implementations, the above method embodiments may be applied to or in a network device. That is, the execution entity of the above method embodiments may be a network device, a chip, a chip module, or a module, etc., which is not limited herein.

A chip is further provided in embodiments of the disclosure. The chip includes a processor, a memory, and computer programs or instructions stored in the memory. The processor is configured to execute the computer programs or instructions to perform the operations of the above method embodiments.

A chip module is further provided in embodiments of the disclosure. The chip module includes a transceiver assembly and a chip. The chip includes a processor, a memory, and computer programs or instructions stored in the memory. The processor is configured to execute the computer programs or instructions to perform the operations of the above method embodiments.

A computer-readable storage medium is further provided in embodiments of the disclosure. The computer-readable storage medium is configured to store computer programs or instructions which, when executed, are operable to implement the operations of the above method embodiments.

A computer program product is further provided in embodiments of the disclosure. The computer program product includes computer programs or instructions which, when executed, are operable to implement the operations of the above method embodiments.

A communication system is further provided in embodiments of the disclosure. The communication system includes the terminal device and the network device above.

It may be noted that, for the sake of brevity, the foregoing embodiments are described as a series of action combinations. However, it will be appreciated by those skilled in the art that the disclosure is not limited to the sequence of actions described. According to embodiments of the disclosure, some steps may be performed in other orders or simultaneously. In addition, it will be appreciated by those skilled in the art that the embodiments described in the specification are preferable embodiments, and the actions, steps, modules, or units involved are not necessarily essential to the disclosure.

In the foregoing embodiments, the elaboration of each embodiment has its own emphasis. For the parts not described in detail in one embodiment, reference can be made to related elaborations in other embodiments.

The operations of the method or algorithm described in embodiments of the disclosure may be implemented by means of hardware, or may be implemented by executing software instructions by a processor. The software instructions can be implemented by corresponding software modules, which can be stored in a RAM, a flash memory, a ROM, an EPROM, an electrically EPROM (EEPROM), registers, hard disk, mobile hard disk, CD-ROM, or any other form of storage medium known in the art. An exemplary storage medium is coupled to the processor, such that the processor can read information from the storage medium and write information to the storage medium. The storage medium can also be a component of the processor. The processor and the storage medium may be located in an ASIC. In addition, the ASIC can be located in a terminal device or a management device. The processor and the storage medium may also be present as discrete components in the terminal device or the management device.

Those skilled in the art will appreciate that, all or part of functions described in embodiments of the disclosure can be implemented through software, hardware, firmware, or any other combination thereof. When implemented by software, all or part of the functions can be implemented in the form of a computer program product. The computer program product includes one or more computer instructions. When the computer instructions are applied and executed on a computer, all or part of the operations or functions of embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disc, a hard disc, or a magnetic tape), an optical medium (such as a digital video disc (DVD)), or a semiconductor medium (such as a solid state disk (SSD)), etc.

Each module/unit in various devices or products described in the foregoing embodiments may be a software module/unit or a hardware module/unit, or some may be a software module/unit and some may be a hardware module/unit. For example, with regard to various devices or products applied to or integrated into a chip, various modules/units included therein may all be realized by means of hardware such as a circuit. Alternatively, at least some of the modules/units may be realized by means of a software program run on a processor integrated into the chip, and the rest (if any) modules/units may be implemented by means of hardware such as a circuit. The same also applies to various devices or products applied to or integrated into a chip module or various devices or products applied to or integrated into a terminal device.

The objectives, technical solutions, and advantages of embodiments of the disclosure are described in detail in the foregoing implementations. It may be appreciated that, the foregoing elaborations are merely some implementations of embodiments of the disclosure, but are not intended to limit the protection scope of embodiments of the disclosure. Any modifications, equivalent replacements, improvements, and the like made based on the technical solutions of embodiments of the disclosure shall all fall within the protection scope of embodiments of the disclosure.

## Claims

1. A method for multicast broadcast service (MBS) transmission, comprising:
receiving first information, wherein the first information comprises information related to an MBS broadcast supported by a first-type terminal device, and a maximum bandwidth supported by the first-type terminal device is 20 megahertz (MHz); and
receiving the MBS broadcast according to the first information.

2. The method of claim 1, wherein the first information comprises first indication information, and the first indication information indicates a frequency-domain resource for the MBS broadcast supported by the first-type terminal device.

3. The method of claim 2, wherein the frequency-domain resource for the MBS broadcast supported by the first-type terminal device comprises one of:
control resource set (CORESET) 0, a frequency-domain resource in CORESET 0, an initial downlink bandwidth part (DL BWP) configured via system information block (SIB) 1, or a frequency-domain resource in the initial DL BWP configured via SIB1.

4. The method of claim 2, wherein
the frequency-domain resource for the MBS broadcast supported by the first-type terminal device is the same as a frequency-domain resource for an MBS broadcast supported by a second-type terminal device; or
the frequency-domain resource for the MBS broadcast supported by the first-type terminal device is not the same as the frequency-domain resource for the MBS broadcast supported by the second-type terminal device; wherein a maximum bandwidth supported by the second-type terminal device is not restricted to 20 MHz.

5. The method of claim 4, wherein when the frequency-domain resource for the MBS broadcast supported by the first-type terminal device is the same as the frequency-domain resource for the MBS broadcast supported by the second-type terminal device, the frequency-domain resource for the MBS broadcast supported by the first-type terminal device comprises CORESET 0.

6. The method of claim 2, wherein when the same first indication information indicates both the frequency-domain resource for the MBS broadcast supported by the first-type terminal device and a frequency-domain resource for an MBS broadcast supported by a second-type terminal device, the frequency-domain resource for the MBS broadcast supported by the first-type terminal device comprise CORESET 0, wherein a maximum bandwidth supported by the second-type terminal device is not restricted to 20 MHz.

7. The method of claim 1, wherein the first information comprises second indication information, the second indication information indicates all or some of information applicable to the first-type terminal device in SIB 20 except resource configuration information, and the resource configuration information is used for configuring a frequency-domain resource for an MBS broadcast.

8. The method of claim 7, wherein the information except the resource configuration information comprises channel information, and the channel information indicates a physical downlink shared channel (PDSCH) parameter used for multicast traffic channel (MTCH) reception, and/or indicates a PDSCH parameter used for multicast control channel (MCCH) reception.

9. The method of claim 1, wherein the first information is carried in system information (SI) except SIB 20 or is carried in SIB 20.

10. The method of claim 9, wherein the SI except SIB 20 comprises SIB 21.

11. A method for multicast broadcast service (MBS) transmission, comprising:
sending first information, wherein the first information comprises information related to an MBS broadcast supported by a first-type terminal device, and a maximum bandwidth supported by the first-type terminal device is 20 megahertz (MHz); and
sending the MBS broadcast according to the first information.

12. The method of claim 11, wherein the first information comprises first indication information, and the first indication information indicates a frequency-domain resource for the MBS broadcast supported by the first-type terminal device.

13. The method of claim 12, wherein the frequency-domain resource for the MBS broadcast supported by the first-type terminal device comprises one of:
control resource set (CORESET) 0, a frequency-domain resource in CORESET 0, an initial downlink bandwidth part (DL BWP) configured via system information block (SIB) 1, or a frequency-domain resource in the initial DL BWP configured via SIB1.

14. The method of claim 12, wherein
the frequency-domain resource for the MBS broadcast supported by the first-type terminal device is the same as a frequency-domain resource for an MBS broadcast supported by a second-type terminal device; or
the frequency-domain resource for the MBS broadcast supported by the first-type terminal device is not the same as the frequency-domain resource for the MBS broadcast supported by the second-type terminal device; wherein a maximum bandwidth supported by the second-type terminal device is not restricted to 20 MHz.

15. The method of claim 14, wherein when the frequency-domain resource for the MBS broadcast supported by the first-type terminal device is the same as the frequency-domain resource for the MBS broadcast supported by the second-type terminal device, the frequency-domain resource for the MBS broadcast supported by the first-type terminal device comprises CORESET 0.

16. The method of claim 12, wherein when the same first indication information indicates both the frequency-domain resource for the MBS broadcast supported by the first-type terminal device and a frequency-domain resource for an MBS broadcast supported by a second-type terminal device, the frequency-domain resource for the MBS broadcast supported by the first-type terminal device comprise CORESET 0, wherein a maximum bandwidth supported by the second-type terminal device is not restricted to 20 MHz.

17. The method of claim 11, wherein the first information comprises second indication information, the second indication information indicates all or some of information applicable to the first-type terminal device in SIB 20 except resource configuration information, and the resource configuration information is used for configuring a frequency-domain resource for an MBS broadcast.

18. The method of claim 17, wherein the information except the resource configuration information comprises channel information, and the channel information is used for providing parameters used for receiving a physical downlink shared channel (PDSCH) for a multicast traffic channel (MTCH).

19. The method of claim 11, wherein the first information is carried in system information (SI) except SIB 20 or is carried in SIB 20.

20. The method of claim 19, wherein the SI except SIB 20 comprises SIB 21.

21. An apparatus for multicast broadcast service (MBS) transmission, comprising:
a receiving unit configured to receive first information, wherein the first information comprises information related to an MBS broadcast supported by a first-type terminal device, and a maximum bandwidth supported by the first-type terminal device is 20 megahertz (MHz); and
the receiving unit being further configured to receive the MBS broadcast according to the first information.

22. An apparatus for multicast broadcast service (MBS) transmission, comprising:
a sending unit configured to send first information, wherein the first information comprises information related to an MBS broadcast supported by a first-type terminal device, and a maximum bandwidth supported by the first-type terminal device is 20 megahertz (MHz); and
the sending unit being further configured to send the MBS broadcast according to the first information.

23. A terminal device, comprising a processor, a memory, and computer programs or instructions stored in the memory, wherein the processor is configured to execute the computer programs or instructions to implement the method of any one of claims 1 to 10.

24. A network device, comprising a processor, a memory, and computer programs or instructions stored in the memory, wherein the processor is configured to execute the computer programs or instructions to implement the method of any one of claims 11 to 20.

25. A chip, comprising a processor and a communication interface, wherein the processor is configured to implement the method of any one of claims 1 to 10 or 11 to 20.

26. A computer-readable storage medium, configured to store computer programs or instructions which, when executed, are operable to implement the method of any one of claims 1 to 10 or 11 to 20.
